**Europäisches Patentamt**

(19) **European Patent Office** (11) Publication number : **0 015 970**

**Office européen des brevets** **B2**

(12) # NEW EUROPEAN PATENT SPECIFICATION

(45) Date of publication of the new patent specification :
**06.07.88**

(21) Application number : **79900457.7**

(22) Date of filing : **10.05.79**

(86) International application number :
**PCT/GB 79/00066**

(87) International publication number :
**WO/7901057 (13.12.79 Gazette 79/25)**

(51) Int. Cl.⁴ : **D 21 H  5/20**, D 21 H  1/02,
H 01 M  2/14, B 01 F  17/00,
C 07 C143/00, B 32 B  29/00

(54) BATTERY SEPARATOR MATERIAL.

(30) Priority : **11.05.78 GB 1976377**
**11.05.78 GB 1898778**
**11.05.78 GB 1222179**

(43) Date of publication of application :
**01.10.80 Bulletin 80/20**

(45) Publication of the grant of the patent :
**01.06.83 Bulletin 83/22**

(45) Mention of the opposition decision :
**06.07.88 Bulletin 88/27**

(84) Designated contracting states :
**FR**

(56) References cited :
DE-A- 2 509 823
FR-A- 2 318 977
GB-A- 1 087 635
GB-A- 1 116 762
GB-A- 1 230 577
GB-A- 1 423 967
GB-A- 1 439 514
GB-A- 1 440 737
GB-A- 1 452 807
GB-A- 1 603 635
JP-A-77 092 336
JP-A-79 022 531
US-A- 3 351 495
US-A- 3 472 700
US-A- 3 847 676
US-A- 3 870 567
US-A- 3 947 537
US-A- 3 985 580
US-A- 3 987 139
US-A- 4 000 967
US-B-52 446 4
GRACE Data Sheets "Darak Separators", p. 13
(17.03.78), p. (25.11.77)

(73) Proprietor : **TULLIS RUSSELL & COMPANY LIMITED**
**Markinch, Glenrothes**
**Fife, KY76PB (GB)**

**CHLORIDE GROUP PUBLIC LIMITED COMPANY**
**52 Grosvenor Gardens**
**London SW1W 0AU (GB)**

(72) Inventor : **McCALLUM, David John McRonald**
**11 West Albert Road**
**Kirkcaldy, Fife (GB)**
Inventor : **CLIFFORD, Alexander Ralston**
**11 Carnoustie Gardens**
**Glenrothes, Fife (GB)**
Inventor : **CLEGG, Gordon Alexander**
**2 Hurst Crescent**
**Rawtenstall, Rossendale Lancashire (GB)**
Inventor : **PEARSON, Ernest James**
**134 Manchester Road**
**Swinton, Manchester (GB)**

(74) Representative : Jackson, Peter Arthur et al
**GILL JENNINGS & EVERY 53-64 Chancery Lane**
**London WC2A 1HN (GB)**

## Description

Conventional battery separators, used for example in secondary lead-acid SL1 vehicle batteries, are formed by thin sheets of electrically insulating porous material which are immersed in the electrolyte between adjacent plates. Each separator has, on its face adjacent to the positive plate a series of horizontally spaced vertical ribs which enable upward escape of the battery gases, such as nascent oxygen, which are evolved.

One form of existing separator is made of an absorbent paper impregnated with about 30 % of a phenolic resin to give the paper wet strength and rigidity and to protect the cellulose from undue oxidation. The projecting ribs are formed either by deposited strips of PVC or a hot melt adhesive, or by embossing the ribs and protecting them by the application of an adhesive.

An alternative existing separator is formed by extruding a thin sheet of sintered PVC, the ribs being formed integrally during the extrusion.

The phenolic resin impregnated paper separators tend to be brittle and the impregnation step together with the application of the hot melt adhesive to produce or protect the ribs involves significant expense. The extruded separators are also significantly more expensive.

The porosity of the separator should be high, to allow the passage through the separator of ions, and thus to present a low electrical resistance, but the pores in the separators should be as small as possible to inhibit the passage through the separator of contaminants and prevent dendritic growth. It is a further criticism of existing commercial impregnated separators that the mean pore size is not as small as would be desirable.

Proposals have been made to make separators from non-woven sheets of polyolefin fibres, this having the advantage that the sheets incorporate a large thermoplastic component and can be thermally embossed to provide integral projecting ribs. However, polyolefins are hydrophobic and it has been recognised as necessary to incorporate in the polyolefin fibres, or otherwise in a separator sheet, a wetting agent which causes the separator to be wetted easily by the battery liquid. The problem still exists of maintaining good wetting out properties of the separator over extended periods of use as the wetting agents tend to leach out.

US-A-3 985 580 discloses a process for preparing a porous compacted, self-supporting, non-woven mat of polyolefin fibre useful as a battery separator comprising extruding a heated polyolefin through multiple die openings into a gas stream to attenuate the polyolefin into fibres having a diameter of about 1-10 microns (micrometres), collecting the fibres as a self-supporting non-woven mat having a thickness of 20-100 mils (0.508-2.540 mm), contacting the self-supporting non-woven mat with an aqueous system comprising water and an amount of a surfactant effective for making the self-supporting non-woven mat wettable, drying the resulting wettable self-supporting, non-woven mat, and compacting the dried, wettable, self-supporting, non-woven mat to form the porous, compacted, wettable, self-supporting, non-woven mat of polyolefin fibre useful as a battery separator, the compacted mat having a thickness of about 10-40 mils (0.254-1.016 mm) and pores having a pore size of about 10-40 microns (micrometres), characterised by the presence in the aqueous system of an amount of colloidal silica effective for causing the compacted, wettable, self-supporting, non-woven mat to remain wettable after being washed with running water for about sixteen hours.

JP-A-92 336/77 discloses a battery separator sheet made by the wet paper-making process from a fibre mix containing 70 % polyethylene synthetic pulp and 80 % based on the fibre mix of a diatomaceous earth.

DE-A-2 509 823 discloses a battery separator in the form of a paper-like synthetic sheet made by a water-laid process from synthetic fibres.

In accordance with the present invention, we provide battery separator material in the form of a paper web which has an electrical resistance after immersion for 20 minutes in battery acid of no more than 300 m · ohms cm², the web having been formed from a furnish containing a synthetic pulp and incorporating a filler and a wetting agent, characterised in that the filler is incorporated within the fibrils of the synthetic pulp, which incorporation in conjunction with the combination of filler and wetting agent is such that the wetting agent is retained by the filler to an extent that after an accelerated ageing test, as herein defined, the electrical resistance of the web after immersion for 20 minutes in battery acid is not greater than 300 m · ohms cm².

In this context the term « synthetic pulp » has its generally accepted meaning of a pulp made up of fibrils of a polyolefin, for example by a flash spinning process. The individual fibrils may be present in various sizes and various specific surfaces, the shape and size distribution not being unlike that of refined wood pulp. Each fibril usually has a central backbone with a number of laterally projecting branch tendrils. Suitable examples of synthetic pulp would be derived from high density polyethylene or polypropylene. Methods of producing such synthetic pulps are described in G.B.-A-1 287 917 and 1 350 487. These methods produce fibres with very large surface areas e.g. above 1 m²/gram and the fibres are staple fibres 0.2 to 3 mms in length. The polyolefins may have high molecular weight e.g. in the range 40,000 to 20,000,000 especially 500,000 and above.

As compared to the previous proposal to make battery separators from non-woven sheets of extruded polyolefin fibres laid in a mat, the paper web according to the invention, being formed on a paper making machine from a furnish incorporating a significant component of synthetic pulp, has the advantage of cheapness and better homogeneity. An even more important, and somewhat surprising, advantage is that the use of a pulp, the fibrils of which are filled with an inorganic filler, leads to a lower electrical resistance across the separator, particularly after extended life in a battery, which suggests that the filler acts to retain the wetting agent. It is hypothesised that the filler may be present at surface portions of the fibrils and provide active sites at which molecules of wetting agent are held on the surface of the fibrils.

Appropriate fillers will be inert in the battery environment and possible fillers are barium sulphate, a diatomaceous earth such as Perlite, a synthetic silicate, or china clay. The filler is preferably present in the synthetic pulp fibrils to an amount of at least 25 % by dry weight of the synthetic pulp and a preferred upper limit is 50 %. We have obtained particularly good results with a filled synthetic pulp consisting of polyethylene fibrils filled with between 40 and 50 % of china clay.

Preferred wetting agents are organic sulphonates, such as Lumo 1683 (anionic) aryl alkyl sulphonate from Zschimmer and Schwarz ; or phenol ethoxylates, such as Antarox C0430 nonyl phenol ethoxylate (nonionic) of the general formula $R(CH_2CH_2O)_nH$, where n is on average 4, from GAF (UK), or Triton X45 octyl phenol ethoxylate (nonionc) of the general formula $R(CH_2CH_2O)_nH$, where n is on average 5 (more specifically polyethylene glycol mono [p-tert-octyl phenyl] ether), from Rohm & Haas. Of these the phenol ethoxylates seem to be most efficient. Other wetting agents, such as organic sulphonates with polyester groups, quaternary ammonium chloride, and ethyoxylated amines and amines may be used but are believed to be of lesser interest.

A preferred level of addition of the wetting agent is up to 6 %, e.g. between 1 % and 6 % by weight of dry synthetic pulp.

The wetting agent may be added during paper making, that is either added to the furnish or sprayed onto the paper web whilst the web is still wet. Alternatively, it may be possible for the wetting agent to be incorporated in the dry pulp during manufacture of the synthetic pulp.

One particular useful way of adding part of the wetting agent in the furnish involves the mixing into the furnish of a porous silicate, such as Perlite, pretreated with the wetting agent. The porous silicate is absorbent and acts as a carrier for the wetting agent.

By appropriate selection of the components from which the paper web according to the invention is made, particularly the inorganic filler and wetting agents, it is possible to obtain a web not only having an electrical resistance, after immersion in battery acid, e.g. sulphuric acid of 1 280 sg. for 20 minutes, of no more than 300 m · ohm cm², preferably no more 200 m · ohms cm², but for the wetting agent to be retained to such an extent that after an accelerated ageing test the electrical resistance of the web after immersion for 20 minutes in battery acid is no more than 300 m · ohms cm², and preferably no more than 250 cm · ohms cm². The accelerated ageing test referred to is defined as immersing 12 cm × 10 cm sheets cut from the thermally consolidated paper web in 1 280 sg. sulphuric acid at 75 °C for one hour before washing in water for 11/2 hours and drying at 90 °C for 30 to 40 minutes. During the washing the sheets were separated by 1 mm and contacted by distilled water moving at 5 l/min, at a contact rate of 40 ccs of water/cm² of sheet/min.

The paper web will usually be provided, before being cut into individual separator sections with projections. These may be applied by depositing, for example strips of a hot melt adhesive on the web. However, the fibres constituting the homogeneously dispersed synthetic component of the paper web are thermoplastic and this leads to the possibility of forming ribs, dimples or other projections integrally with the paper web by a heating and pressing step. During this step the thermoplastic fibres will be softened and at least partially fused together before setting in the new configuration. Particularly when the paper is embossed with parallel ribs, as is preferred for rigid separators, these embossed ribs will provide the separator with additional strength and rigidity.

The thermoplastic nature of the paper web also leads to the possibility of providing the separators with additional strength and rigidity without brittleness, by thermally consolidating the separators substantially throughout its area. This will be achieved by subjecting the paper web to heat and pressure over substantially its whole area to consolidate the paper web, again as a result of partial fusion and resetting of the synthetic pulp fibrils. This can provide a further cost saving compared to the conventional phenolic impregnation.

Both the embossing of the paper web and the thermal consolidation are preferably simultaneously carried out. This could be done by passing the paper web through heated embossed calender rolls. Preferably however the paper web is preheated and passed between a roll having projections corresponding to those to be embossed in the web and a resilient backing roll.

An important advantage of making the paper separators from a furnish incorporating a significant quantity of synthetic pulp is that there is a lower average pore size, and narrower distribution of pore size, and a high porosity, that is pore volume, than is present in paper sheets of equivalent weight made from wood pulp. The weight loss due to oxidation of a separator incorporating synthetic pulp is similar to that of a separator of phenolic-impregnated cellulose paper without the need for the phenolic impregnation. This is a result of the acid resistance of the synthetic pulp fibres. For the application to battery separators, the maximum pore size should be less than 50 microns with a maximum mean value of about 20 microns. However, it may be possible with a paper separator made in accordance with the invention to achieve a maximum pore size of about 25 microns with a mean value of less than 15 microns.

Ideally the porosity of the paper separator should not be less than 60 %. This determines to some extent the electrical resistance, and wetting out properties of the preparator. However, if the electrical resistance does not exceed a value of about 200 m · ohms cm$^2$ after soaking for 20 minutes in 1.28 sg. sulphuric acid, lower porosities would be acceptable,. In practice it is found that this can be achieved in a paper separator made in accordance with the invention when the porosity is between 45 and 55 %. It is also possible to obtain an oxidation weight loss of no more than 25 to 35 % with the new separators.

It would be anticipated that the thermal consolidation previously referred to may to some extent reduce the porosity and increase the electrical resistance of the paper web, but we have surprisingly found that if the press pressure on the paper machine and the press pressure during thermal consolidation, and also the moisture content of the paper web prior to thermal consolidation are carefully controlled, a low average pore size of about 10 microns, with a distribution of ± 4 microns, and an acceptably high porosity can be achieved. Essentially this involves zero or minimum press pressures necessary for runability on the paper machine, medium to high press pressure i.e. up to 5 psi (0.35 kg/cm$^2$) on the thermal consolidation rolls, and a moisture content in the paper web immediately prior to the thermal consolidation of between 2 and 3 % by weight.

The furnish will usually contain at least 60 %, and preferably at least 70 % synthetic pulp by weight with an upper limit of 95 %, or even 100 %, any balance being a compatible pulp such as wood pulp. Although a paper could be made from a furnish containing a very high proportion of synthetic pulp using, for example, an Inclined Wire machine or a Rotiformer machine, it is difficult to manufacture paper webs from a furnish containing more than about 80 % by weight of currently available synthetic pulp on most Fourdrinier machines. As paper making on a Fourdrinier machine is a cheaper process than on such other machines, and as a paper web made from a furnish containing between 60 % and 80 % by dry pulp weight of synthetic pulp is acceptable in the present context of battery separators, the paper web will preferably be made using a Fourdrinier machine.

As far as the balance of wood pulp is concerned, and as will subsequently be demonstrated, the best balance of pore structure i.e. minimum mean pore size and lowest maximum pore size with low electrical resistance and good permanency of low electrical resistance characteristics are achieved when a bleached softwood sulphate pulp at a wetness of between 42° and 47° SR is included in the furnish. The electrical resistance can further be improved by the addition of bleached hardwood sulphate pulp if some reduction in sheet strength can be tolerated.

We have found that the electrical properties of the separators are significantly improved if the furnish incorporates polyester staple fibres, preferably at a level of between 5 and 20 % by dry weight of the furnish, that is pulp and polyester fibres. This is particularly valuable when the pulp contains a mixture of both synthetic and wood pulp in which case the polyester fibres will effectively replace a corresponding proportion of the synthetic pulp component. Suitable polyester staple fibres will have a denier of between 1.5 and 10 and a length of between 3 and 6 mm. The inclusion of such polyester fibres has enabled us to achieve electrical resistance results in the range of from 50 and 100 m · ohms cm$^2$.

The paper web may be a simplex web but this could lead in use to the formation through the web of undesirable pin holes resulting from oxidation of accidental clusters of cellulose pulp fibres. This problem is avoided if the web is a duplex web as any pin holes in one layer are unlikely to coincide with any pin holes in the other web.

If the web is a duplex web, at least the layer to be used next to the positive plate should have a significantly high oxidation resistance.

According to another aspect of the present invention a battery separator comprises a laminate of at least one first layer affording a profiled exterior appropriate for juxtaposition to the positive plate of a lead acid battery and having a high content of synthetic pulp and at least one other layer adherent to the first layer, this second layer having a lower content of synthetic pulp than the said first layer.

The first, or positive, layer preferably contains at least 75 % e.g. 80 % to 100 % by weight of synthetic pulp based on total dry solids.

The first layer may also contain a minor proportion e.g. up to 25 % e.g. 10 to 20 % by weight of fibres having a higher stiffness than the synthetic pulp fibres or fibres effective to impart increased stiffness to the separator. These fibres may be glass, polyester of polycarbonate fibres. The first layer may also contain a minor proportion e.g. up to 25 % of cellulose fibres e.g. wood pulp fibres.

The second layer may contain 30 to 60 % of cellulose fibres e.g. wood pulp fibres e.g. 45 % to 55 % cellulose fibres, and synthetic pulp. It may also contain a minor proportion e.g. up to 25 % e.g. 10 to 20 % of fibres having a higher stiffness than the synthetic wood pulp fibres or fibres effective to impart increased stiffness to the separator.

The two layers are preferably adhered during the paper making technique by forming the two layers as two separate water leaves and then juxtaposing the two wet layers and then passing the double ply material over the hot cans of the paper making machine or otherwise drying them under conditions such as to ensure that they adhere to each other.

Such synthetic pulps can form adherent waterleaves without the need for additional resin binders being incorporated in the furnish although the presence of such binders is not excluded.

The synthetic pulp fibres are preferably subjected to an oxidation treatment prior to being formed into the furnish used to form the waterleaf.

4

This oxidative process is designed to increase the wettability of the fibres. This can assist in the paper making process and also improve the properties of the battery separator itself, reducing the need for post treatment with a wetting agent or incorporation of wetting agents in the furnish which may interfere with the paper making process.

The oxidation process can consist of or include treatment of the fibres e.g. of polyolefin, with chromic acid, nitric acid, nitric acid-hydrochloric acid blends such as aqua regia, hypochlorite, permanganate, chlorosulphonic acid, or hydrogen peroxide, ozone or ultra-violet radiation and this later agent can be used in conjunction with the other agents.

Gas phase chemical treatments e.g. by corona discharge or with ozone or ultraviolet light can also be used to increase the wettability of the fibres.

Other chemical treatments effective to increase the wettability of the polyolefin fibres can also be used for example gas phase exposure to halogens and sulphur dioxide, carbon monoxide or carbon dioxide in sunlight or ultraviolet light or other ionizing radiation to achieve halosulphonation or halocarboxylation of the fibres. The fibres must then be subjected to hydrolysis and substantially complete elimination of ions liable to interfere with the electrochemical process in the battery for example halogen ions and heavy metal ions such as chromium ; this can be achieved by washing and by the substantial washing effect of the large volumes of water used in the furnish which are removed during the paper making technique. It is preferred however to use oxidative techniques which do not introduce interfering ions.

It is desirable to incorporate some synthetic pulp in the second layer to allow hot calendering to increase the adhesion between the first and second layers. Thus if the calendering is carried out in spaced apart areas e.g. parallel lines which may be parallel to the edges of the separator or inclined thereto or spaced apart dots or areas, heavy consolidation can be carried out to fuse contacting fibres of the synthetic pulp to each other in the first layer and in the second layer and also across the boundary region where the two layers meet. Overall calendering could, if desired, be carried out with a profiled roller which would impart ribs or channels to the material at the same time, a rib on one surface corresponding to a channel on the others. This not only increases the lamination strength but also increases the strength of the individual layers. Since the heavy consolidation is limited to only part of the surface area of the separator the required porosity values can still be achieved.

The surface pore size of the separator can also be controlled, and thereby the resistance of the separator to « treeing through », by applying a light higher temperature overall consolidation to the surface of the first layer, preferably before the profiled calendering, to achieve fusion of the synthetic pulp fibres to each other immediately adjacent to the surface without significant consolidation in the body of the separator. Clearly this surface fusion must not be such as to destroy the porosity of the surface, merely it must reduce the pore size of the surface.

The calendering at the surface of the first layer reduces the pore size of the separator in the surface in proximity to the positive plate and thus reduces the tendency for « treeing through » to occur. Preferably the surfaces of the ribs on the first layer are subjected to the most consolidation.

According to a preferred embodiment of the invention a battery separator comprises a laminate of a first layer affording a profiled exterior appropriate for juxtaposition to the positive plate of a lead acid battery and containing at least 75 % by weight of polyethylene synthetic pulp fibres, preferably having a surface area in excess of 1 m²/gram, 0 to 25 % by weight of cellulose pulp fibres and 0 to 25 % by weight of synthetic fibres having a stiffness greater than the polyethylene fibres, and a second layer adherent to the first layer and containing 30 to 60 % by weight of cellulose pulp fibres, 40 to 70 % by weight of polyethylene synthetic pulp fibres and 0 to 25 % by weight of synthetic fibres having a stiffness greater than the polyethylene fibres, the separator having parallel spaced lines of ribs or folds, preferably disposed parallel to an opposed pair of edges of the separator, the consolidation being such that polyethylene fibres are fused to each other in each area of consolidation through the first layer and into the second layer whereby the adherence of the layers is increased.

The lines of consolidation are preferably 0.5 to 2 mm wide and are spaced by 1 to 4 mms, the spacing between lines preferably being greater than the width of the lines e.g. 2, 3, 4 or even 8 times greater. The overall reduction in thickness of the separator is such that the thickness is at least 40 % e.g. 70 to 90 % to 99 % of the original thickness of the unconsolidated material, which may have been 0.2 to 1 mm.

A suitable embossed paper web may have a weight of between 75 and 300, but preferably between 85 and 200, and most preferably between 140 and 180 g/m². The paper may be filled with specific absorbents for contaminants likely to be present or released within the battery with which the separator is to be used.

We find that improved wear resistance of the ultimate separator can be achieved by the inclusion of a melamine formaldehyde component. An appropriate inclusion is between 1 and 2 % by weight of the total dry furnish of melamine formaldehyde (cationic resin) known as BC788 or BC789 supplied by British Industrial Plastics Limited.

The invention may be put into practice in various ways and a number of specific embodiments will be described to illustrate the invention with reference to the examples to be described. (Examples 1 to 5, and 13 to 15, are for comparative purposes only).

The following experimental results have been obtained and are indicative of the important features of the invention :

## 0 015 970

### Comparison of Different Synthetic Pulps (Examples 1 to 8)

160 g/m² hand sheets were made containing 70 % by weight of synthetic pulp pretreated with 5 % by weight of the surfactant Triton X45 (wetting agent) octyl phenol ethoxylate and 0.1 % by weight of hydrocarbon based defoamer Foamaster 44 from Diamond Shamrock blended with 30 % by weight of an unbleached softwood sulphate pulp at 45° SR. The hand sheets which were 450 micron thick were thermally consolidated to 400 micron thickness (at 150 °C for polyethylene and 170 °C for polypropylene) before being tested for electrical resistance after immersion for 20 minutes in 1.280 sg. battery sulphuric acid electrolyte both before and after accelerated ageing as previously defined. the results obtained appear in the following table :

Table 1

| Ex. | Synthetic (70% Sheet Component) | Electrical Resistance (m.ohms cm²) | |
|---|---|---|---|
| | | At 20 Mins | After Accelerated Ageing |
| 1. | Pulpex A (unfilled polyethylene) | 1812 | 2012 |
| 2. | Turu 35 (unfilled polyethylene) | 850 | too high to record |
| 3. | Turu 36 (unfilled polyethylene) | 1325 | too high to record |
| 4. | SWP E940 (unfilled polyethylene) | 4562 | too high to record |
| 5. | SWP R830 (unfilled polyethylene) | 2437 | too high to record |
| 6. | Carifil R120C (polypropylene filled with 16% Barium Sulphate) | 160 | 260 |
| 7. | $C_2KM$ (polyethylene filled with 27% China Clay) | 250 | 290 |
| 8. | $C_2KS$ (polyethylene filled with 45% China Clay) | 160 | 290 |

These results clearly illustrate the value of using a filled synthetic pulp which results in greatly improved resistance values which are still far better than the unfilled materials even after the ageing test.

### Comparison of Surfactants (Examples 9 to 15)

160 g/m² hand sheets were prepared containing 70 % by weight of synthetic pulp, in this case $C_2KS$ manufactured by Montedison (polyethylene filled with 45 % China clay), pretreated with 4 % by weight of various surfactants and 0.15 % by weight of a hydrocarbon based defoamer Foamaster 44 from Diamond Shamrock before blending with 30 % by weight of an unbleached softwood sulphate at 30° SR. After thermal consolidation at 150 °C from 450 to 400 micron, the maximum pore diameters and electrical resistances after 20 minutes immersion and accelerated ageing (as in the previous experiments) of the sheets were determined. The results obtained are given in the Table 2 below :

Table 2

| Ex. | Surfactant (4% on $C_2KM$) | Electrical Resistance (m.ohms cm²) | | |
|---|---|---|---|---|
| | | Max. Pore Diameter (microns) | At 20 Mins | After Accelerated Ageing |
| 9. | Aryl alkyl sulphonate Lumo 1683 ex Zschimmer & Schwarz | 65 ± 4 | 150 | 250 |
| 10. | Nonyl phenol ethoxylate Sunaptol NP55 ex Pechiney Ugine Kuhlmann | 63 ± 4 | 150 | 175 |

Table 2 (Continued)

| Ex. | Surfactant (4% on C₂KM) | Electrical Resistance (m.ohms cm²) | | |
|---|---|---|---|---|
| | | Max. Pore Diameter (microns) | At 20 Mins | After Accelerated Ageing |
| 11. | Nonyl phenol ethoxylate Antarox CO430 ex GAF (UK) | 57 ± 4 | 165 | 190 |
| 12. | Octyl phenol ethoxylate Triton X45 ex Rohm & Haas | 61 ± 4 | 150 | 200 |
| 13. | Di-octyl sulpho succinate Humifen WT27G ex GAF (UK) | 50 ± 4 | 125 | 1125 |
| 14. | Di-octyl sulpho succinate Warcowet O60 ex Warwick Chemicals | 60 ± 4 | 125 | 2125 |
| 15. | No surfactant | 43 ± 4 | 2000 | too high to record |

These experimental results indicate that all surfactants increase the value obtained for the maximum pore diameter and reduce the 20 minute electrical resistance value. The di-octyl sulpho succinates supplied by GAF (UK) exhibit the best pore size value and 20 minute electrical resistance value but poorer electrical resistance after accelerated ageing. The nonyl and octyl phenol ethoxylates provide an acceptable combination of all three properties.

. Some examples of the production and conversion of the paper web to ribbed separator form in accordance with the invention will now be described by reference to the accompanying drawings, in which :

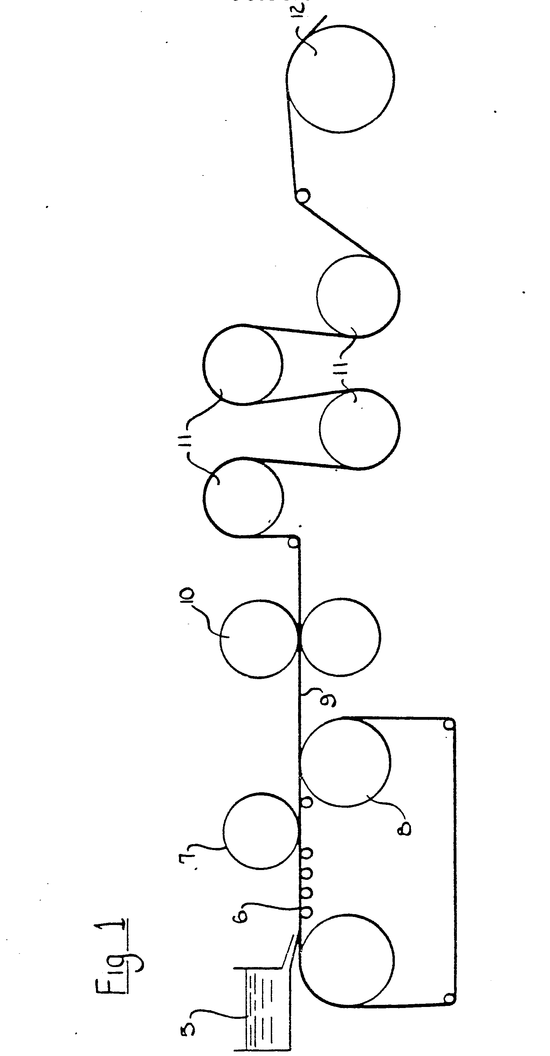

Figure 1 is a diagram of a paper machine ;
Figure 2 is a diagram of an embossing unit ;
Figure 3 is a section of an embossing roller of the Figure 2 unit ; and,
Figure 4 is a perspective view of a finished battery separator.

## Example 16

To a suspension of synthetic polyethylene pulp the fibrils of which are filled with 27 % by weight of china clay, and named Ferlosa C₂KM from Montedison, was added 5 % by weight of dry synthetic pulp, of Lumo 1683 an aryl alkyl sulphonate surfactant from Zschimmer & Schwarz. This mixture of synthetic pulp and surfactant was then blended with softwood sulphate wood pulp in a ratio of 30 parts dry wood pulp to 70 parts dry synthetic pulp, and the mixture was beaten to 30° SR. After the blending 0.5 % of aluminium sulphate per total dry weight of fibre was added for improved retention of the surfactant.

The furnish was then introduced into a flow box 5 of a Fourdrinier paper machine, from which the furnish was laid on a moving wire 6 which passed under a dandy roll 7 and around a couch roll 8 through which suction was applied. The resulting wet paper web 9 was passed through a press section 10 around drying cylinders 11, and reeled onto a reel 12, by-passing the conventional machine calender rolls.

The machine parameters were adjusted so that the wet press roll pressure at the section 10 was adjusted to a minimum operating pressure ; the temperature of the machine drying cylinders 11 was maintained below 120 °C ; and the production rate was adjusted to achieve a moisture content at reel up of between 2 and 3 %. Immediately after paper manufacture the paper rolls were enclosed in a polythene wrapper.

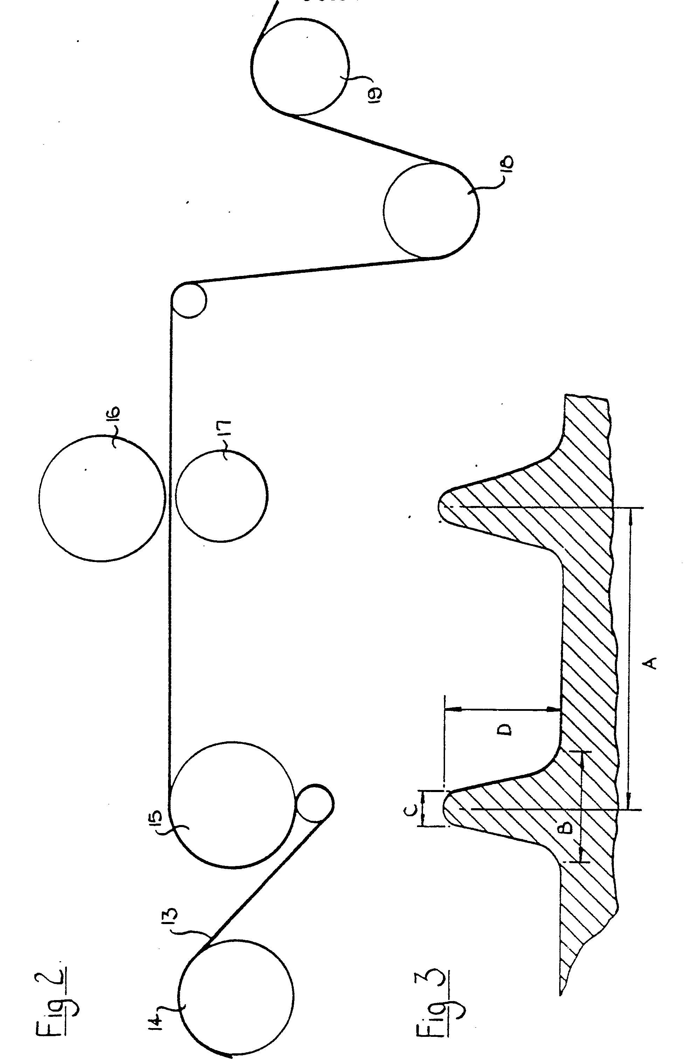

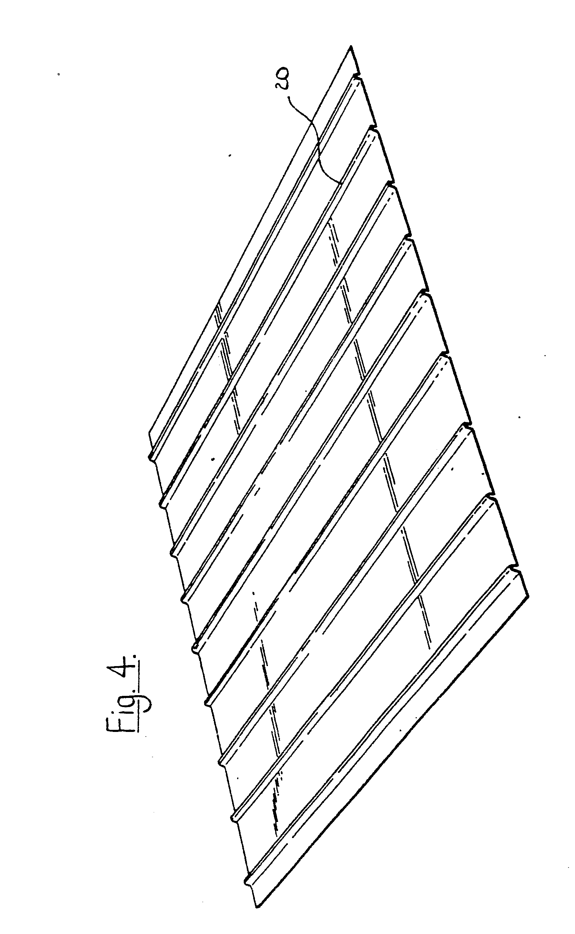

The reeled base paper was then thermally consolidated and embossed by means of the unit shown in Figures 2 and 3. Thus the base paper web 13 was unreeled from a reel 14, still with a moisture content of between 2 and 3 %, and at a speed of between 5 and 15 metres per minute passed around a heated cylinder 15 which was at a temperature of between 170 and 200 °C, through the nip between a pair of embossing rolls 16 and 17, around a chilled cooling cylinder 18, and reeled onto a reel 19. The rolls 16 and 17 are a male steel embossed roll 16 and a rubber roll 17 of controlled hardness. An acceptable profile for the roll 16 is shown in Figure 3, in which the dimension A is 15.5 mm, B is 500 microns, C is between 100 and 200 microns, and D is 1 200 microns.

It will be appreciated that the thermoplastic synthetic pulp component of the paper web 13 will be softened during passage around the cylinder 15, and the thermoplastic fibrils will be partially fused together during passage through the rolls 16 and 17. These rolls compress the paper web over its full area and simultaneously emboss the web with parallel ribs in the cross web direction at 15.5 mm centres. As

0 015 970

the web is subsequently cooled, particularly after passage around the cylinder 18, the thermoplastic component sets in the new configuration.

The resulting embossed paper web, which has a weight of 160 g/m² is subsequently unreeled from the reel 19 and cut into individual square battery sections, of which one having ribs 20 and a square side of 15 cm is shown in Figure 4. It will be appreciated that the ribs 20 will have substantially the same profile as the roll 16 as shown in Figure 3.

Example 17

The process as described in Example 16 was modified by reducing the initial surfactant addition to the synthetic pulp from 5 % to 0.3 % by weight of dry synthetic pulp. However, in addition further of the surfactant was applied to a level of 1 % by weight of dry synthetic pulp to the paper web by spraying or roller application at the dandy roll or at some position between the dandy roll and the drying cylinders 11. It is possible by this modification to achieve lower addition levels of surfactant to the paper than can be achieved by the more conventional wet end addition. This modification also improves the ease of papermaking by reducing the foaming tendencies of the surfactants.

Example 18

The process as described in Example 16 was modified by replacing some of the dry synthetic pulp with 1.5 denier 6 mm polyester staple fibres as sold by Dupont under the name Dacron. The furnish consisted of 30 % wood pulp, 60 % synthetic pulp, and 10 % polyester fibres. This modification showed that lower electrical resistance can be obtained by the addition of polyester fibres as electrical resistance figures in the range of 75 m · ohms cm² to 125 m · ohms cm² were obtained.

Example 19

The process as described in Example 16 was modified by halving the initial surfactant addition to the synthetic pulp. In addition a porous silicate sold under the name Perlite was pretreated with 50 % of the surfactant mentioned in Example 16. This pretreated porous silicate was added to the total fibre blend of synthetic and wood pulp at a level of 3 % by weight of the dry synthetic and wood pulp.

Example 20

The process as described in Example 16 was modified by reducing the proportion of wood pulp in the mixture of synthetic and wood pulp from 30 % to 20 % and increasing the beating of the pulp from 30 °SR to 55 °SR. This modification allows a higher level of synthetic pulp to be used thereby giving improved oxidation resistance.

Example 21

To a dispersion of synthetic polyethylene pulp, the fibrils of which are filled with 42 % by weight of china clay, and named Ferlosa C₂KS from Montedison, was added 4.5 % by weight of dry synthetic pulp, of Antarox CO430, a nonyl phenol ethoxylate surfactant from GAF (UK). To a dispersion of bleached softwood sulphate pulp beaten to 45 % SR was added 5 %, by weight of dry wood pulp, of BC788, a melamine formaldehyde wet strength aid from British Industrial Plastics Limited. The mixture of synthetic pulp and surfactant was then blended with the mixture of wood pulp and wet strength aid in a ratio of 30 parts of dry wood pulp to 70 parts by weight of dry synthetic pulp. After the blending 0.5 % by weight of aluminium sulphate of total dry weight of fibres was added for improved retention of surfactant.

This furnish was then made up into a paper web on a Fourdrinier machine, and subsequently treated, as described in Example 16.

Example 22

The process as described in Example 21 was modified to replace the Ferlosa C₂KS synthetic pulp by a synthetic polypropylene pulp, the fibrils of which are filled with 16 % by weight of barium sulphate, and named Carifil from Shell.

Example 23

The process as described in Example 21 was modified to produce a duplex paper web. One ply of the duplex was made from 70 parts by dry weight of Ferlosa C₂KS synthetic pulp, 15 parts by dry weight of 45° SR bleached softwood sulphate pulp and 15 parts by dry weight of 45 % SR bleached hardwood sulphate pulp. The other ply was made from a furnish consisting of 80 parts by dry weight synthetic pulp

8

# 0 015 970

and 20 parts by dry weight of bleached softwood sulphate pulp. Both plies contain surfactant and wet strength aids at similar concentrations as in Example 21. The ply containing the greatest synthetic component was provided on the side to be used towards the positive battery plate, that is the side bearing the male ribs 20 and shown uppermost in Figure 4.

## Example 24

The process as described in Example 21 was modified to produce a two layer paper web. One ply was made from a finish of 70 parts by dry weight of Ferlosa $C_2KS$ synthetic pulp, and 30 parts bleached softwood sulphate pulp. The other ply was made from a finish of 80 parts by dry weight of Ferlosa $C_2KS$ synthetic pulp and 20 parts dry weight of bleached softwood sulphate pulp.

Both layers contained Antarox CO430 surfactant and melamine formaldehyde wet strength and in the proportions indicated in Example 21. The duplex material had an electrical resistance before ageing of 150 m · ohms $cm^2$ and after ageing of 225 m · ohms $cm^2$.

## Claims

1. Battery separator material comprising a paper web which has an electrical resistance after immersion for 20 minutes in battery acid of no more than 300 m · ohms $cm^2$, wherein the web has been formed from a furnish containing a synthetic pulp and incorporates a filler and a wetting agent, characterised in that the filler is incorporated within the fibrils of the synthetic pulp, which incorporation in conjunction with the combination of filler and wetting agent is such that the wetting agent is retained by the filler to an extent that.after an accelerated ageing test, the electrical resistance of the web after immersion for 20 minutes in battery acids is no greater than 300 m · ohms $cm^2$, the accelerated ageing test involving the steps of immersing 12 cm × 10 cm sheets cut from the web in 1.280 sg. sulphuric acid at 75 °C for one hour, washing the sheets in water for 11/2 hours and drying the sheets at 90 °C for between 30 and 40 minutes, the sheets, during the washing, being separated by 1 mm and being contacted by distilled water moving at 5 l/min, at a contact rate of 40 ccs of water/$cm^2$ of sheet/min.

2. Material according to claim 1, in which the wetting agent is an organic sulphonate.

3. Material according to claim 1, in which the wetting agent is a phenol ethoxylate.

4. Material according to any one of the preceding claims, in which the filler is a diatomaceous earth or a synthetic silicate.

5. Material according to any one of claims 1 to 3, in which the filler is barium sulphate.

6. Material according to any one of claims 1 to 3, in which the filler is china clay.

7. Material according to any one of the preceding claims in which the filler is present in the synthetic pulp fibrils to an amount of at least 25 % by dry weight of the synthetic pulp.

8. Material according to claims 6 and 7, wherein the synthetic pulp is polyethylene pulp and the filler is china clay which is present in the synthetic pulp fibrils to an amount of between 40 and 50 % by dry weight of the synthetic pulp.

9. Material according to any one of the preceding claims, in which the wetting agent is present at a level of between 1 and 6 % by dry weight of the synthetic pulp.

10. Material according to any one of the preceding claims, incorporating a melamine formaldehyde component.

11. Material according to any one of the preceding claims, which has been formed from a furnish containing a mixture of pulps of which at least 60 % by dry weight is provided by the synthetic pulp.

12. Material according to any one of the preceding claims, which has been thermally consolidated over substantially its whole area.

13. Material according to any one of the preceding claims, which has been thermally embossed to provide projections from the plane of the web.

14. Material according to any one of the preceding claims, which incorporates polyester staple fibres.

15. Material according to any one of the preceding claims, having a weight of between 85 and 200 $g/m^2$.

16. Material according to claim 15, in which the weight is between 140 and 180 $g/m^2$.

17. Material according to any one of the preceding claims, which is a duplex web.

18. A battery separator characterised by comprising a laminate of at least one first layer affording a profiled exterior appropriate for juxtaposition to the positive plate of a lead acid battery and having a content of synthetic pulp and at least one other layer adherent to the first layer, this second layer having a lower content of synthetic pulp than the said first layer, and at least one of the layers being composed of material as claimed in any of claims 1 to 16.

19. A separator as claimed in claim 18, in which the synthetic pulp fibres are subjected to oxidation treatment prior to being formed into the furnish used to form the water leaf, the treatment being designed to increase the wettability of the fibres.

**0 015 970**

Patentansprüche

1. Batterie-Separator-Material mit einer Papierbahn, deren elektrischer Widerstand nach 20-minütigem Eintauchen in Batteriesäure nicht mehr als 300 mΩcm² beträgt, wobei die Bahn aus einem Eintrag hergestellt ist, der eine synthetische Pulpe, einen anorganischen Füller und ein Benetzungsmittel enthält, dadurch gekennzeichnet, daß der Füller innerhalb der Fasern der synthetischen Pulpe angeordnet ist, wobei die Anordnung in Verbindung mit der Kombination von Füller und Benetzungsmittel so gewählt ist, daß das Benetzungsmittel in einem solchen Maße durch den Füller festgehalten wird, daß nach einem beschleunigten Alterungsversuch der elektrische Widerstand der Bahn nach 20-minütigem Eintauchen in Batteriesäure nicht größer als 300 mΩcm² ist, wobei der beschleunigte Alterungsversuch umfaßt : das Eintauchen von 12 cm × 10 cm Bögen, die von der Bahn abgeschnitten wurden, in Schwefelsäure mit einem spezifischen Gewicht von 1,280 bei 75 °C für eine Dauer von einer Stunde, das Waschen der Bögen in Wasser für eine Dauer von eineinhalb Stunden und das Trocknen der Bögen bei 90 °C während einer Zeit von 30 bis 40 Minuten, wobei die Bögen beim Waschen einen Abstand von 1 mm aufweisen und von destilliertem Wasser berührt werden, das sich mit 5 l/min bewegt, bei einer Berührungsgeschwindigkeit von 40 cm³ Wasser/cm² Blattfläche/Minute.

2. Material nach Anspruch 1, bei dem das Benetzungsmittel ein organisches Sulfonat ist.

3. Material nach Anspruch 1, bei dem das Benetzungsmittel ein Phenoläthoxylat ist.

4. Material nach einem der vorhergehenden Ansprüche, bei dem der Füller eine Diatomeenerde oder ein synthetisches Silicat ist.

5. Material nach einem der Ansprüche 1 bis 3, bei dem der Füller Bariumsulfat ist.

6. Material nach einem der Ansprüche 1 bis 3, bei dem der Füller Kaolin ist.

7. Material nach einem der vorhergehenden Ansprüche, bei dem der Füller in den synthetischen Pulpefasern in einer Menge von mindestens 25 Trockengewichtsprozent der synthetischen Pulpe enthalten ist.

8. Material nach den Ansprüchen 6 und 7, bei dem die synthetische Pulpe eine Polyäthylenpulpe und der Füller Kaolin ist, der in den synthetischen Pulpefasern in einer zwischen 40 und 50 Trockengewichtsprozent der synthetischen Pulpe liegenden Menge vorhanden ist.

9. Material nach einem der vorhergehenden Ansprüche, bei dem das Benetzungsmittel in einer zwischen 1 und 6 Trockengewichtsprozent der synthetischen Pulpe liegenden Menge vorhanden ist.

10. Material nach einem der vorhergehenden Ansprüche mit einer Melaminformaldehyd-Komponente.

11. Material nach einem der vorhergehenden Ansprüche, das aus einem Eintrag hergestellt ist, der ein Gemisch aus Pulpen enthält, in dem mindestens 60 Trockengewichtsprozent durch die synthetische Pulpe gebildet sind.

12. Material nach einem der vorhergehenden Ansprüche, das thermisch im wesentlichen über seine gesamte Fläche verdichtet worden ist.

13. Material nach einem der vorhergehenden Ansprüche, das thermisch geprägt worden ist, um aus der Ebene der Bahn hervorstehende Vorsprünge zu bilden.

14. Material nach einem der vorhergehenden Ansprüche, das Polyesterstapelfasern enthält.

15. Material nach einem der vorhergehenden Ansprüche, dessen Gewicht des Materials zwischen 85 und 200 g/m² liegt.

16. Material nach Anspruch 15, dessen Gewicht des Materials zwischen 140 und 180 g/m² liegt.

17. Material nach einem der vorhergehenden Ansprüche, das eine zweilagige Bahn ist.

18. Batterie-Separator, gekennzeichnet durch eine Schichtung aus mindestand einer ersten Lage mit Außenprofil, das der positiven Platte einer Bleisäurebatterie gegenüber angeordnet werden kann, und mit einem Gehalt synthetischer Pulpe und aus mindestens einer weiteren Lage, die an der ersten Lage haftet und einen geringeren Gehalt synthetischer Pulpe als die erste Lage aufweist, wobei mindestens eine der Lagen aus einem Material nach einem der Ansprüche 1 bis 16 hergestellt worden ist.

19. Separator nach Anspruch 18, bei dem die synthetischen Pulpefasern einer Oxidationsbehandlung unterzogen sind, bevor sie zu dem Eintrag ausgebildet werden, der zur Bildung des Wasserblatts benutzt wurde, wobei die Behandlung so bemessen ist, daß die Benetzbarkeit der Fasern erhöht wird.

**Revendications**

1. Matière pour séparateur pour batteries comprenant un tissu en papier qui a une résistance électrique, après immersion pendant 20 minutes dans l'acide d'une batterie, ne dépassant pas 300 m·ohm cm², dans laquelle le tissu a été formé à partir d'une matière première contenant une pulpe synthétique et comprend une charge et un agent mouillant, caractérisée en ce que la charge est incorporée dans les fibrilles de la pulpe synthétique, cette incorporation, jointe à la combinaison de la charge et de l'agent mouillant, étant telle que l'agent mouillant est retenu par la charge à un degré où, après un test de vieillissement accéléré, la résistance électrique du tissu après immersion pendant 20 minutes dans l'acide pour batteries ne soit pas supérieure à 300 m·ohm cm², le test de vieillissement accéléré impliquant les étapes suivantes : immersion de feuilles de 12 cm × 10 cm coupées dans le tissu, dans l'acide sulfurique de densité 1,280 à 75 °C pendant une heure, lavage des feuilles dans l'eau pendant 1 heure et demie et séchage des feuilles à 90 °C pendant 30 à 40 minutes, les feuilles, pendant le lavage, étant séparées de 1 mm et étant au contact de l'eau distillée s'écoulant à 5 l/min, à un taux de contact de 40 cm³ d'eau/cm² de feuille/min.

2. Matière selon la revendication 1, caractérisée en ce que l'agent mouillant est un sulfonate organique.

3. Matière selon la revendication 1, caractérisée en ce que l'agent mouillant est un phénol éthoxylate.

4. Matière selon l'une quelconque des revendications précédentes, caractérisée en ce que la charge est une terre d'infusoires ou un silicate synthétique.

5. Matière selon l'une quelconque des revendications 1 à 3, caractérisée en ce que la charge est du sulfate de baryum.

6. Matière selon l'une quelconque des revendications 1 à 3, caractérisée en ce que la charge est de la terre à porcelaine.

7. Matière selon l'une quelconque des revendications précédentes, caractérisée en ce que la charge est présente dans les fibrilles de pulpe synthétique dans une proportion d'au moins 25 % en poids sec de la pulpe synthétique.

8. Matière selon les revendications 6 à 7, caractérisée en ce que la pulpe synthétique est de la pulpe de polyéthylène et la charge est de la terre à porcelaine qui est présente dans les fibrilles de la pulpe synthétique en une quantité comprise entre 40 et 50 % en poids sec de la pulpe synthétique.

9. Matière selon l'une quelconque des revendications précédentes, caractérisée en ce que l'agent mouillant est présent en une teneur comprise entre 1 et 6 % en poids sec de la pulpe synthétique.

10. Matière selon l'une quelconque des revendications précédentes, caractérisée en ce qu'elle comprend un composant mélamine formaldéhyde.

11. Matière selon l'une quelconque des revendications précédentes, qui a été formée à partir de matières premières contenant un mélange de pulpes dont au moins 60 % en poids sec est fourni par la pulpe synthétique.

12. Matière selon l'une quelconque des revendications précédentes, qui a été renforcée thermiquement sur sensiblement toute sa surface.

13. Matière selon l'une quelconque des revendications précédentes, qui a été emboutie thermiquement pour fournir des saillies à partir de la surface plane du papier.

14. Matière selon l'une quelconque des revendications précédentes, qui comprend des fibres de polyester.

15. Matière selon l'une quelconque des revendications précédentes, ayant un poids compris entre 85 et 200 g/m².

16. Matière selon la revendication 15, dont le poids est compris entre 140 et 180 g/m².

17. Matière selon l'une quelconque des revendications précédentes, qui est un tissu duplex.

18. Séparateur pour batteries caractérisé par le fait qu'il est formé d'un produit stratifié comprenant au moins une première couche présentant un extérieur profilé approprié à la juxtaposition à la plaque positive d'une batterie plomb/acide et contenant de la pulpe synthétique, et au moins une autre couche adhérant à la première couche, cette deuxième couche ayant une teneur en pulpe synthétique inférieure à celle de la première couche, et une des couches au moins étant composée d'une matière revendiquée dans l'une quelconque des revendications 1 à 16.

19. Séparateur selon la revendication 18, dont les fibres de pulpe synthétique sont soumises à un traitement oxydant avant d'être transformées en matière première utilisée pour former la feuille élémentaire, le traitement étant destiné à accroître la mouillabilité des fibres.

Fig 1

0 015 970

Fig 2

Fig 3

0 0 1 5 9 7 0

Fig. 4.